(19) Europäisches Patentamt / European Patent Office / Office européen des brevets

(11) **EP 4 354 965 A1**

(12) # EUROPEAN PATENT APPLICATION

(43) Date of publication:
**17.04.2024 Bulletin 2024/16**

(21) Application number: **22200599.3**

(22) Date of filing: **10.10.2022**

(51) International Patent Classification (IPC):
**H04W 36/36** *(2009.01)*      **H04W 36/08** *(2009.01)*
**H04W 52/02** *(2009.01)*

(52) Cooperative Patent Classification (CPC):
**H04W 36/36; H04L 5/001; H04W 52/0216;**
H04W 36/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Vodafone Group Services Limited
Newbury RG14 2FN (GB)**

(72) Inventors:
• **KULAKOV, Alexey
London W2 6BY (GB)**
• **WORRALL, Chandrika
London W2 6BY (GB)**

(74) Representative: **Boult Wade Tennant LLP
Salisbury Square House
8 Salisbury Square
London EC4Y 8AP (GB)**

(54) **A METHOD OF MANAGING HANDOVER BETWEEN CELLS IN A CELLULAR TELECOMMUNICATIONS NETWORK**

(57)     A method of managing handover between cells in a cellular telecommunications network comprises: communicating, to one or more active user equipment, UEs, served by a source cell, power mode data of the source cell; determining, for each of one or more potential target cells, conditional handover configuration data, wherein the conditional handover configuration data comprise one or more handover execution conditions; modifying the one or more handover execution conditions, based on the power mode data.

Figure 3A

## Description

### Field of the invention

The invention relates to managing handover in a cellular network. Specifically, the invention provides methods for managing handover of active UEs that are connected to the network via a serving cell that is scheduled to enter a power saving mode.

### Background

Energy consumption in mobile telecommunications networks is a significant component of the Operational Expenditure (OPEX) of the network (typically between 20% and 90%). In particular, a large proportion of the power consumption may be attributed to the base stations in the radio access network (with the data centers also consuming significant power).

In 5G networks, energy consumption of 5G sites depends on the active equipment, rather than on the data load placed on the equipment. Total energy consumption in 5G sites is increased compared to previous network technologies due to the need for more antennas, more frequency bands, and a denser network of small cells, rather than relatively fewer large cells. In one example, a typical 5G site may need around 11.5Kw of power, which is around 70% more than a 2G/3G/4G base station providing a similar level of coverage.

Within the base station, the radiofrequency (RF) equipment (power amplifier, transceivers, cables etc.) contributes the largest component of energy consumption. Typically, the RF equipment uses about 65% of the total energy consumed by the base station. For comparison, cooling consumes around 17.5%, digital signal processing/baseband consumes around 10%, and the AC/DC converter consumes around 7.5%.

Improving energy efficiency in a mobile network can be achieved through a multitude of solutions, including smart building, virtualizing the core, and enhancing RAN efficiency through modernization of legacy equipment and implementation of low-powered solutions, to optimize power consumption and efficiency on both the UE and Network side. It is a goal of the present invention to provide a new method for improving power efficiency in telecommunications networks.

### Summary

The present invention provides a method of managing handover between cells in a cellular telecommunications network, the method comprising:

communicating, to one or more user equipment UEs (preferably active UEs) served by a source cell, power mode data of the source cell;
determining, for each of one or more potential target cells, conditional handover configuration data and one or more associated handover execution conditions; and
modifying the one or more handover execution conditions, based on the power mode data.

As used in this application, a step of "communicating" can comprise sending and/or receiving. Therefore, communicating an indication to a UE may be interpreted as sending an indication to a UE or receiving an indication by the UE. In the same manner, communicating an indication from a base station may be interpreted as sending an indication by the base station or receiving an indication from a base station.

There may be one or more base stations associated with each source cell. The power mode data of the source cell may comprise power mode data of the one or more base stations associated with the source cell.

The method may further comprise identifying the one or more potential target cells.

The one or more handover execution conditions may be modified based on a determination that the source cell is scheduled to enter a power saving mode.

Preferably, the power mode data comprises one or more of:

an indication that the source cell is scheduled to enter a power saving mode (e.g. an actual time or a countdown);
a time at which the source cell is scheduled to enter a power saving mode;
a time remaining until the source cell is scheduled to enter a power saving mode;
one or more threshold modification instructions, based on a time remaining until the source cell is scheduled to enter a power saving mode; and
one or more offset modification instructions, based on a time remaining until the source cell is scheduled to enter a power saving mode.

Preferably, the one or more handover execution conditions comprise:

determining that a signal measurement of the corresponding potential target cell is greater than a signal measurement of the source cell by at least an offset,
wherein modifying the one or more handover execution conditions comprises modifying the offset, based on a time remaining until the source cell is scheduled to enter a power saving mode.

As used in this application, a signal measurement that is "greater" than another signal measurement may be interpreted as providing a better signal. Where signal measurements are provided in decibels (dB) or decibel metres (dBm), the values may typically be negative. In such cases, for example, a value of -80 dBm is interpreted as being greater than a value of -100 dBm. Where a signal measurement relates to a characteristic that is better when the value is lower, such as latency, the skilled person will appreciate that handover should be triggered on determining that a signal measurement of the corresponding potential target cell is lower than a signal measurement of the source cell by at least an offset (or lower than a threshold).

Preferably, the one or more handover execution conditions comprise:

determining that a signal measurement of the corresponding potential target cell is greater than a threshold level,
wherein modifying the one or more handover execution conditions comprises modifying the threshold level, based on a time remaining until the source cell is scheduled to enter a power saving mode. (When there is not much time left, don't consider the signal measurement of the serving cell, only the signal measurement of the potential target cell)

Preferably, each of the one or more handover execution conditions comprises an activation flag, wherein the one or more handover execution conditions comprise:
determining that a signal measurement of the corresponding potential target cell is greater than a threshold level,
wherein modifying the one or more handover execution conditions comprises setting the activation flag from an inactive state to an active state in response to:

an indication that the source cell is scheduled to enter a power saving mode; an instruction to modify the activation flag communicated from the source cell to the UE; or
a determination that a time remaining until the source cell is scheduled to enter a power saving mode is less than a threshold time.

Preferably, the one or more handover execution conditions comprise:
determining that a signal measurement of the corresponding potential target cell is greater than a signal measurement of the other potential target cells.

Preferably, each of the one or more handover execution conditions comprises an activation flag, wherein the one or more handover execution conditions comprise:

determining, in a first handover execution condition, that a signal measurement of the corresponding potential target cell is greater than a signal measurement of the source cell by at least an offset;
determining, in a second handover execution condition, that a signal measurement of the corresponding potential target cell is greater than a threshold level; and
determining, in a third handover execution condition, that a signal measurement of the corresponding potential target cell is greater than a signal measurement of the other potential target cells,
wherein modifying the one or more handover execution conditions comprises:

setting the activation flag of the first handover execution condition from an inactive state to an active state in response to a determination that a time remaining until the source cell is scheduled to enter a power saving mode is less than a first threshold;
setting the activation flag of the second handover execution condition from an inactive state to an active state in response to a determination that a time remaining until the source cell is scheduled to enter a power saving mode is less than a second threshold;
setting the activation flag of the third handover execution condition from an inactive state to an active state in response to a determination that a time remaining until the source cell is scheduled to enter a power saving mode is less than a third threshold.

Modifying the one or more handover execution conditions may additionally comprise modifying the offset and/or threshold, based on the time remaining until the source cell is scheduled to enter a power saving mode.

Preferably, the signal measurement comprises one or more of:

a signal strength indicator; and
a signal quality indicator.

The signal measurement may additionally or alternatively comprise other measurements, including but not limited to timing data, signal latency, channel noise, error rates, and the like.

In one example, the power mode data may be simultaneously broadcast to the one or more active UEs.

In another example, the power mode data may be sent to a group comprising the one or more active UEs.

In another example, the power mode data may be communicated to each of the one or more UEs via a respective dedicated message.

The method by which the power mode data is communicated may depend on the number of active UEs. For example, if there are many active UEs connected then a broadcast message may be an efficient way to communicate the power mode data to each of them. Conversely, if there are relatively few active UEs (e.g., 5 or fewer), it may be more efficient to send a group message or an individual dedicated message to each of the UEs.

The method may further comprise communicating the conditional handover configuration data and/or the handover execution conditions to each of the one or more active UEs.

The conditional handover configuration data and/or handover execution conditions may be communicated to each of the one or more active UEs from a base station associated with the source cell. There may be a plurality of base stations associated with each source cell, in which case, each active UE may receive the conditional handover configuration data and/or handover execution conditions from a respective base station.

The handover execution conditions may be modified by a base station associated with the serving cell and sent from the base station to the UE.

In one example, the conditional handover configuration data may be based on current cell configuration data for the source cell.

Alternatively, the conditional handover configuration data may be based on reference configuration data.

The conditional handover configuration data may be received from the one or more potential target cells.

The method may further comprise receiving the conditional handover configuration data from each of one or more potential target cells.

The UE may receive the conditional handover configuration data from each of one or more potential target cells via a base station associated with the source cell.

In some examples, a potential target cell may receive power mode data from the source cell and modify the conditional handover configuration data, based on the power mode data.

The method may further comprise:

communicating the power mode data from the source cell to a potential target cell;
modifying the conditional handover configuration data, based on the power mode data; and
communicating the modified conditional handover configuration data from the potential target cell to the source cell.

The method may further comprise communicating the modified conditional handover configuration data from the source cell to the UE (optionally, along with one or more associated handover execution conditions).

Where a potential target cell provides modified and unmodified conditional handover configuration data, there may be different handover execution conditions associated with each conditional handover configuration data.

Preferably, each of the one or more active UEs is configured to initiate handover to a potential target cell based on the conditional handover configuration data, if one of the corresponding handover execution conditions is fulfilled.

In other words, for each potential target cell the UE determines conditional handover configuration data associated with the potential target cell and one or more handover execution conditions associated with the conditional handover configuration data. The handover execution conditions define if and when the UE should initiate handover to the potential target cell. The conditional handover configuration data define how the UE should initiate handover to the potential target cell.

Preferably, the method further comprises:
determining that a handover execution condition is fulfilled and initiating handover to the corresponding target cell of the one or more potential target cells, based on the conditional handover configuration data.

In another example, a method of managing handover between cells in a cellular telecommunications network comprises:

communicating, to one or more user equipment UEs served by a source cell, power mode data of the source cell;
determining, for each of one or more potential target cells, one or more handover execution conditions; and

modifying the one or more handover execution conditions, based on the power mode data.

The method may further comprise determining, for each of the one or more potential target cells, conditional handover configuration data associated with the one or more handover execution conditions (and associated with a respective potential target cell). The conditional handover configuration data may be used by the UE to initiate handover to the respective potential target cell, if one of the handover execution conditions is fulfilled.

In another example, a method of managing handover between cells in a cellular telecommunications network comprises:

communicating, to one or more potential target cells, power mode data of a source cell serving one or more user equipment UEs;

determining, for each of one or more potential target cells, conditional handover configuration data and/or one or more associated handover execution conditions; and

modifying the conditional handover configuration data and/or one or more associated handover execution conditions, based on the power mode data.

The present invention also provides a base station configured to perform one or more of the methods described above.

The present invention also provides User Equipment, UE, configured to perform one or more of the methods described above.

The present invention also provides computer software comprising instructions that, when executed by a processor of a computing device, cause the computing device to perform one or more of the methods described above.

The source cell may no longer serve the one or more active UEs once the source cell enters the power saving mode. Therefore, handover may be necessitated by the source cell entering the power saving mode. The corresponding base station(s) may nevertheless serve the one or more active UEs via another cell or RAT. However, the existing cell will be powered down.

The serving cell may be provided by an evolved node B (eNB), a next-generation node B (gNB) or a next-generation evolved node B (ng-eNB). In other words, the radio access technology may preferably be 4G or 5G (although the methods are suitable for any radio access technology).

## Brief description of the drawings

The present invention is described with reference to the following specific non-limiting examples.

Figure 1A illustrates a schematic coverage diagram for a standard cellular network.

Figure 1B illustrates the schematic coverage diagram of Figure 1A, showing examples of extended coverage areas for cells.

Figure 2A illustrates an example cellular network, in which each cell is associated with one corresponding base station, located at the midpoint of the cell.

Figure 2B illustrates an example cellular network, in which each cell is associated with three corresponding base stations, each located at the cell boundary.

Figure 3A schematically illustrates communications between a UE, serving cell, and potential target cells.

Figure 3B illustrates a flowchart showing an example method.

Figure 4A illustrates a graph of a signal measurement against time to illustrate a simplified version of a first example handover execution condition.

Figure 4B illustrates a graph of a signal measurement against time to explain the first example handover execution condition in another scenario.

Figure 4C illustrates a graph of a signal measurement against time to explain how the first example handover execution condition may be modified in accordance with a specific example.

Figure 4D illustrates a graph of a signal measurement against time to explain another way in which the first example handover execution condition may be modified in accordance with a specific example.

Figure 5A illustrates a graph of a signal measurement against time to illustrate a simplified version of a second example handover execution condition.

Figure 5B illustrates a graph of a signal measurement against time to explain the second example handover execution condition in another scenario.

Figure 5C illustrates a graph of a signal measurement against time to explain how the second example handover execution condition may be modified in accordance with a specific example.

Figure 5D illustrates a graph of a signal measurement against time to explain another way in which the second example handover execution condition may be modified in accordance with a specific example.

Figure 6 illustrates a graph of a signal measurement against time for three potential target cells, to illustrate a third example handover execution condition.

Figure 7 illustrates a timeline of three example handover execution conditions being configured and subsequently activated.

Figure 8 illustrates a flowchart showing an example method.

Figure 9A illustrates an example user equipment.

Figure 9B illustrates an example user equipment base station.

## Detailed description

This application describes different power modes of cells, including full power modes, such as "connected mode" and power saving modes, such as "Network Energy Saving Mode". This application also describes handover procedures that may be implemented prior to the cell being placed in a power saving mode, to maintain connections via the telecommunications network for active UEs (such as voice and data connections).

The power mode of a cell may be changed in response to a change in demand placed on the network. For example, some cells may be placed in a power saving mode during the night, when the network load is typically lower. In some cases, the changes to the power mode may be scheduled in advance, so that cells are switched to a power saving mode at the same time each night, for the same period of time.

In a full power mode, such as "connected mode", the cell may be operating normally. Active UEs served by the cell may initiate handover to another cell based on signal measurements in the normal manner. In full power mode, handover conditions are not generally based on the power mode of the cell.

In a low power mode, the cell operates with significantly reduced power consumption. The power consumption attributed to the cell may not be zero because there may be some elements that are powered on in the low power mode (e.g. because they are slow to power on and off or are essential even when the cell is not active). In a low power mode, such as NES (Network Energy Saving) mode, the cell may be unable to establish new connections with UEs or maintain existing connections. Therefore, active UEs that are connected via the serving cell when the cell enters the low power mode may lose their connection. This would cause calls to drop and data sessions to terminate.

When a cell is scheduled to transition from a full power mode to a power saving mode, it is therefore important to handover the active UEs connected to the cell to the best possible alternative cell, before the serving cell enters the power saving mode. UEs in the Idle/Inactive mode will also need to transfer to alternative cells. However, the users of such UEs would not observe a service interruption immediately once the cell enters the power saving mode, whereas the users of active UEs would observe such a service interruption.

If many active UEs experience service interruptions within the same period, this could lead to overload situations on other cells, as these UEs will try to access other cells at the same time (e.g. by sending RRC re-establishment due to the loss of coverage from the serving cell). Such a situation could be avoided by ensuring proper handover of the active UEs prior to the serving cell entering the power saving mode.

The present application therefore provides enhanced handover methods that facilitate handover of UEs away from a serving cell that is scheduled to enter a power saving mode.

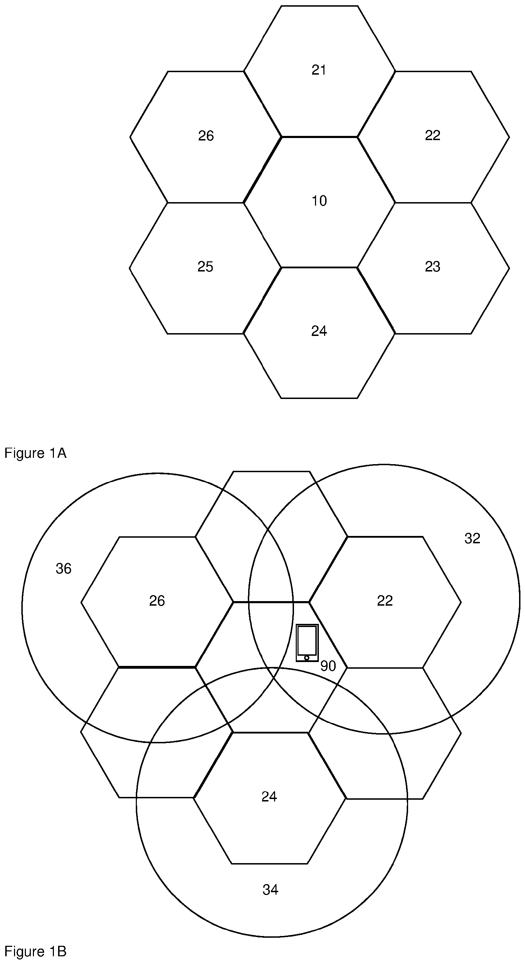

Figure 1A illustrates a schematic coverage diagram for a standard cellular network. As can be seen in Figure 1A, a serving cell 10 is surrounded by neighbouring cells 21 to 26. UEs that are connected via serving cell 10 monitor the signal provided by the serving cell 10 and also monitor signals received from one or more of the neighbouring cells 21 to 26. If the signal from a neighbouring cell, such as cell 22, becomes better than the signal from the serving cell 10 (e.g., because the UE is moving between coverage areas) then the UE may initiate handover to neighbouring cell 22.

Whilst Figure 1A illustrates that the coverage areas of each cell are shaped as tessellating hexagons, this is merely a simple illustration commonly used to explain how multiple cells, each providing coverage over a small area, can be combined to provide coverage over a larger area. In reality, the cell coverage areas are not hexagonal and overlap with each other. Cell signals are therefore detectable outside of the hexagonal coverage areas illustrated. Figure 1B illustrates examples of extended coverage areas for cells 22, 24 and 26, shown in this simplified example as circles 32, 34 and 36, respectively.

As can be seen from Figure 1B, the entirety of the coverage area of serving cell 10 is covered by the extended coverage circles 32, 34 and 36 from neighbouring cells 22, 24 and 26. Therefore, in times of low demand, serving cell 10 may be switched to a power saving mode and coverage may be provided to this geographic area by neighbouring cells 22, 24 and 26.

Moreover, a telecommunications network may comprise cells of varying sizes (e.g. macro, micro and femto cells). Some cells may be used to increase network capacity in areas of high demand, without being essential to provide geographic coverage. In times of lower demand, such cells may be switched to a power saving mode, without compromising overall coverage.

In view of the above, and considering that a large proportion of the power consumption of telecommunications network may be attributed to the base stations, placing a subset of the cells in a power saving mode at times of lower demand would lead to an improvement in power efficiency in the telecommunications network. This may be achieved in some cases without compromising the coverage of the network. In other cases, coverage may be slightly compromised but the reduction in power consumption may justify this.

In order for a cell to enter a power saving mode, it is preferred that no active UEs are connected via that cell, for the reasons discussed above. Consider UE 90 illustrated in Figure 1B, currently served by serving cell 10. If serving cell 10 were to enter a power saving mode while active UE is still connected, active sessions (e.g., voice and/or data sessions) at the UE 90 would terminate. Therefore, UE 90 should handover to an alternative cell, prior to serving cell 10 entering the power saving mode. Neighbour cell 22 may have the best signal, other than that of the serving cell itself (considering the extended coverage area 32 of neighbour cell 22). However, as long as serving cell 10 is still in the connected mode, the signal of the serving cell may be better than the signal of the neighbouring cell. Therefore, under normal conditions, the UE will not initiate handover to the neighbouring cell 22. The UE will therefore experience a drop in service when the serving cell 10 enters the power saving mode. At this point, the UE would need to reconnect and would likely re-establish connectivity via neighbouring cell 22. However, this drop in connection is undesirable.

In view of this, the present application proposes methods that induce a UE served by the serving cell to handover to a neighbouring cell, even if the signal of the serving cell is better.

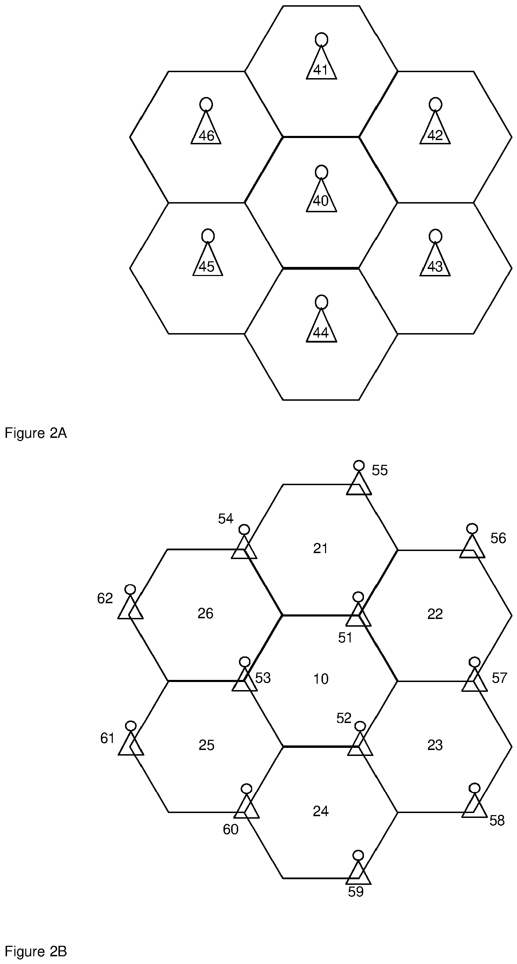

Figure 2A illustrates a simple example, in which each cell is associated with one corresponding base station, located at the midpoint of the cell. Serving cell 10 is associated with base station 40 and neighbouring cells 21 to 26 are associated with base stations 41 to 46, respectively. When serving cell 10 is placed in a power saving mode, base station 40 may be placed entirely in a power saving mode. Likewise, if neighbouring cells 21, 23 and 25 were placed in power saving mode, base stations 41, 43 and 45 could be completely placed in power saving mode.

Figure 2B illustrates an alternative example, in which base stations are located at corners of their associated cells. Each cell is associated with three base stations and cell coverage is provided by a combination of the three associated base stations. In the example illustrated in Figure 2B, serving cell 10 is associated with base stations 51, 52 and 53. Neighbouring cell 21 is associated with base stations 51, 54 and 55; neighbouring cell 22 is associated with base stations 51, 56 and 57; neighbouring cell 23 is associated with base stations 52, 57 and 58; neighbouring cell 24 is associated with base stations 52, 59 and 60; neighbouring cell 25 is associated with base stations 53, 60 and 61; and neighbouring cell 26 is associated with base stations 53, 54 and 62.

When serving cell 10 is placed in a power saving mode, it may not be feasible to place each of the associated base stations 51, 52 and 53 completely into a power saving mode, because these base stations are also associated with other cells, which may not be placed into a power saving mode. For example, if neighbouring cells 22, 24 and 26 are to remain in full power mode, whilst serving cell 10 and neighbouring cells 21, 23 and 25 are to be placed into a low power mode, base station 51 may be partially placed in a low power mode. Components of base station 51 relating to serving cell 10 (and neighbouring cell 21) may be placed in low power mode, whilst components of the base station 51 that are associated with neighbouring cell 22 may remain in full power mode. Likewise, components of base stations 52 and 53 that are associated with serving cell 10 (and neighbouring cells 23 and 25) may be placed in a power saving mode and components that are associated with neighbouring cells 24 and 26 and may remain in full power mode.

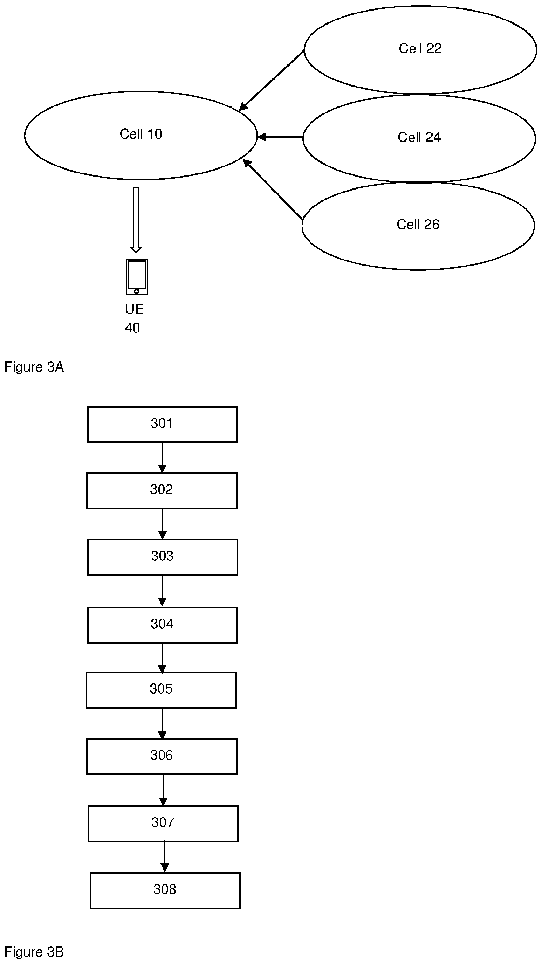

Figure 3A schematically illustrates communications between the UE 40, serving cell 10, and potential target cells 22, 24 and 26. A flowchart illustrating an example method is illustrated in Figure 3B.

7

At step 301, conditional handover configuration data is sent to the serving cell 10 from the potential target cells: cell 22, cell 24 and cell 26. These potential target cells may be cells that are geographically proximal to the serving cell (i.e., they may be neighbouring cells).

The UE 40 is currently served by serving cell 10. At step 302, serving cell 10 provides the conditional handover configuration data to UE 40, so that the UE can initiate handover to a potential target cell if certain conditions are met (e.g., the signal of the potential target cell becomes better than the signal of the serving cell). The serving cell 10 may further provide handover execution conditions to UE 40, which define conditions under which handover should be initiated. These conditions may include thresholds and offsets defining the conditions.

At step 303, a determination is made that cell 10 is scheduled to enter a power saving mode in X minutes (or at time Y).

At step 304, serving cell 10 provides power mode data to the UE 40 (e.g., via a broadcast message, group message or dedicated message). The power mode data may comprise an indication that serving cell 10 is going to enter a power saving mode in X minutes (or at time Y). In some examples, the power mode data may comprise:

a flag (e.g., a bit of data) indicating that the serving cell (or associated base station) is scheduled to enter a power saving mode;
a time (e.g. 19:00) at which the serving cell (or associated base station) is scheduled to enter a power saving mode; and/or

a countdown (e.g. 10 minutes) after which the serving cell (or associated base station) is scheduled to enter a power saving mode.

At step 305 (which may be concurrent with step 304), cell 10 may also send the UE 40 updated conditional handover configuration data for cells 22, 24 and 26.

The skilled person is familiar with conditional handover mechanisms. Conditional handover is based on the premise that each of the potential target cells prepare the resources for the UE potentially handing over to that cell and provides the conditional handover command to the UE 40. The handover command will only be executed if one or more of the handover execution conditions are fulfilled. The handover execution conditions are provided from the serving cell (specifically, from a base station associated with the serving cell, such as a source gNB). These conditions are related to the handover events and their parameters.

At step 306 (which may be concurrent with steps 304 and 305), serving cell 10 provides modified handover execution conditions to the UE 40. The modified handover execution conditions include adapted thresholds and offsets for conditional handover to potential target cells 22, 24 and 26. Due to the modified handover execution conditions, the UE is more likely to initiate handover to a potential target cell before the serving cell enters a power saving mode.

The handover execution conditions are in terms of handover events and may be related to a reference signal received power/quality (RSRP/RSRQ) value difference between serving cell 10 and a respective potential target cell 22, 24 or 26. The handover execution conditions may take thresholds or offsets into consideration, depending on the handover event configured.

As an alternative to step 306, the UE 40 may modify the handover execution conditions, in response to the power mode data received from the serving cell in step 304. The UE 40 may modify the handover execution conditions in accordance with instructions stored on the UE 40 or instructions received from the serving cell 10.

At step 307, additional modified handover execution conditions may be determined. If the time until the cell 10 enters the power saving mode is provided in step 304, additional handover execution conditions that take this time into account could be defined as:

- trigger handover when a potential target cell signal measurement is better than the serving cell measurement by an offset amount, where the offset amount decreases as the time of the power saving mode approaches; and/or
- trigger handover when a potential target cell signal measurement is greater than a threshold value, where the threshold value decreases as the time of the power saving mode approaches.

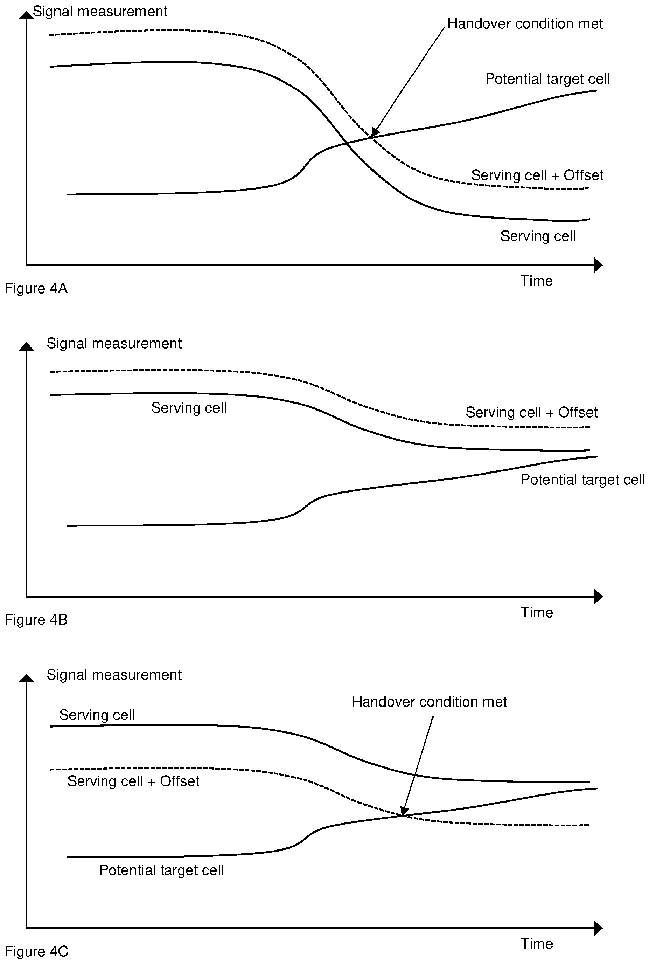

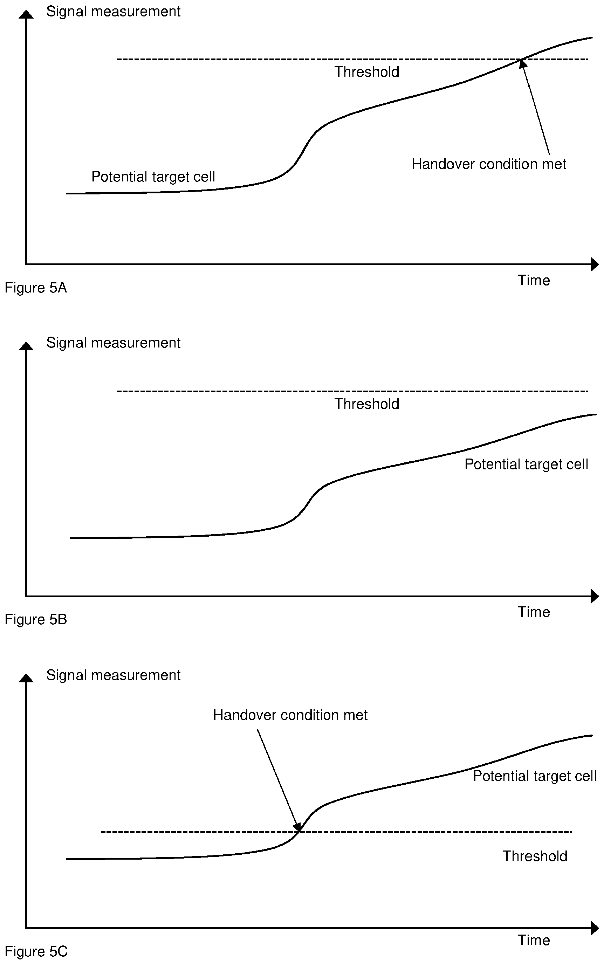

Some handover execution conditions are explained in more detail with reference to specific examples illustrated in Figures 4A to 4D and 5A to 5C.

At step 308, once the time X is about to expire, if there are still connected mode UEs, these UEs should initiate handover to the best available cell out of the potential target cells.

Handover execution conditions (also called "handover events") may be configured at the UE with a conditional handover (CHO) command. The events can be used to trigger handover to the respective potential target cell. Events can be also configured at the UE (using the "measurements config" command).

In some examples, a potential target cell may receive power mode data from the source cell and modify the conditional handover configuration data, based on the power mode data. The potential target cell may modify the conditional handover configuration data, based on the power mode data, by offering reduced functionality to the UE. Given the source cell is scheduled to enter a power saving mode, the handover execution conditions are more easily met. Therefore, the UE may be more likely to accept reduced functionality in order to obtain a valid handover prior to the source cell enters the power saving mode (and avoid dropped calls and data sessions).

The potential target cell may be unable to offer handover to the UE using the unmodified conditional handover configuration data (e.g., because the load on the potential target cell is already high). However, based on the power mode data (i.e. an indication that the source cell will enter a power saving mode), the potential target cell may be able to offer handover to the UE using the modified conditional handover configuration data (which may offer reduced functionality, reduced bandwidth or other modified characteristics).

This may be particularly useful if there are few available potential target cells, if the potential target cells that are available have poor signal measurements. By providing modified conditional handover configuration data from a potential target cell, the UE is supplied with more handover options. Therefore, it may be more likely that the UE will handover successfully before the source cell enters the power saving mode.

Figure 4A illustrates a graph of a signal measurement (such as RSRP or RSRQ) against time to illustrate a simplified version of a first example handover execution condition, known in the art as the A3 handover event.

As can be seen in Figure 4A, the handover condition is met when the signal measurement of the potential target cell is better than the signal measurement of the serving cell by at least an offset.

The relevant equation for this event is:

$$Mn + Ofn + Ocn - Hys > Mp + Ofp + Ocp + Off$$

Where:

Mn is the signal measurement of the potential target cell;
Ofn is a specific offset related to the frequency of the potential target cell;
Ocn is a specific offset related to the potential target cell;
Mp is the signal measurement of the primary channel of the serving cell;
Hys is a hysteresis parameter relating to this event;
Ofp is a specific offset linked to the frequency of the serving cell;
Ocp is a specific offset linked to the serving cell; and
Off is a specific offset relating to this event.

For the sake of simplicity, the example illustrated in Figure 4A combines the different offsets with the hysteresis parameter (as we are only considering the trigger condition and not the cancel condition). The equation therefore becomes:

$$Potential\ target\ cell\ signal\ measurement > Serving\ cell\ signal\ measurement + Offset$$

As can be seen in Figure 4A, the handover condition is met when the signal measurement of the potential target cell improves relative to the signal measurement of the serving cell and becomes better by the offset amount. This could happen if the UE moves away from the serving cell and towards the potential target cell, for example.

As illustrated in Figure 4B, if the signal measurement of the potential target cell does not become better than the signal measurement of the serving cell by the offset amount, the handover condition will not be met and handover will not be initiated. Where the serving cell is scheduled to enter a power saving mode, it is preferable to encourage handover away from the serving cell. Therefore, the offset may be reduced. As illustrated in Figure 4C, reducing the offset may lead to the handover condition being met more readily. Advantageously, reducing the offset in the run-up to the scheduled power saving mode can reduce the barrier to handover and therefore result in more UEs handing over to alternative cells.

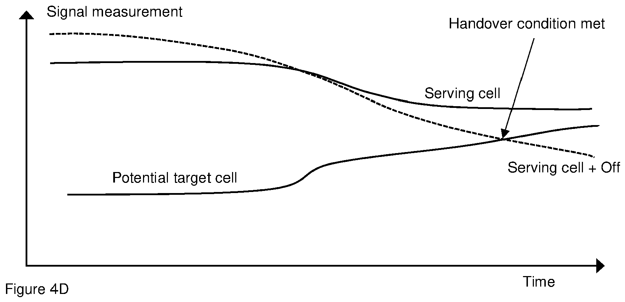

In another example, the offset may be gradually reduced over time, as the time at which the serving cell is scheduled to enter the power saving mode approaches. For example, the offset may be reduced by 1 unit (such as 1 dB or 1 dBm) for each time interval in the run-up to the time at which the serving cell enters the power saving mode. Figure 4D illustrates this example.

Figure 5A illustrates a graph of a signal measurement (such as RSRP or RSRQ) against time to illustrate a simplified version of a second example handover execution condition, known in the art as the A4 handover event.

This handover execution condition does not consider the signal measurement of the serving cell, but just the signal measurement of the potential target cell.

As can be seen in Figure 5A, the handover condition is met when the signal measurement of the potential target cell is above (or better than) a threshold.

The relevant equation for this event is:

$$Mn + Ofn + Ocn - Hys > Thresh$$

Where:

Mn is the signal measurement of the potential target cell;
Ofn is a specific offset related to the frequency of the potential target cell;
Ocn is a specific offset related to the potential target cell;
Hys is a hysteresis parameter relating to this event; and
Thresh is a threshold relating to this event.

For the sake of simplicity, the example illustrated in Figure 5A combines the offsets with the hysteresis parameter (as we are only considering the trigger condition and not the cancel condition). The equation therefore becomes:

$$Potential\ target\ cell\ signal\ measurement > Threshold$$

As can be seen in Figure 5A, the handover condition is met when the signal measurement of the potential target cell improves. This could happen if the UE moves towards the potential target cell, for example.

As illustrated in Figure 5B, if the signal measurement of the potential target cell does not become better than the threshold, the handover condition will not be met and handover will not be initiated. Where the serving cell is scheduled to enter a power saving mode, it is preferable to encourage handover away from the serving cell. Therefore, the threshold may be reduced. As illustrated in Figure 5C, reducing the threshold may lead to the handover condition being met more readily. Advantageously, reducing the threshold in the run-up to the scheduled power saving mode can reduce the barrier to handover and therefore result in more UEs handing over to alternative cells.

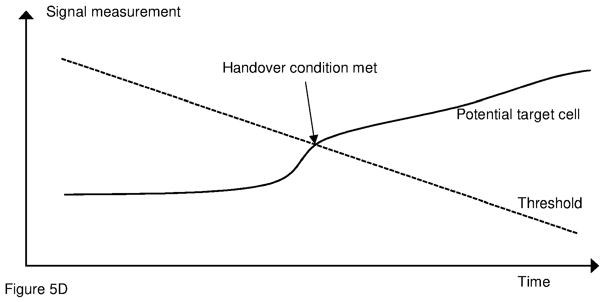

In another example, the threshold may be gradually reduced over time, as the time at which the serving cell is scheduled to enter the power saving mode approaches. For example, the threshold may be reduced by 1 dBm for each time interval in the run-up to the time at which the serving cell enters the power saving mode. Figure 5D illustrates this example.

Advantageously, compared to the condition illustrated with respect to Figures 4A-D, the condition illustrated in Figures 5A-D may trigger even if the serving cell signal measurement is very good.

In the case of the present invention, in both of the example handover execution conditions illustrated in Figures 4A-D and 5A-D, the parameters (thresholds/offsets) within the existing handover events are modified, based on power mode data (e.g. the time running until the serving cell is scheduled to enter the power saving mode, such as NES mode). Since the serving cell will not provide usual services after the power saving mode has been entered, the modified handover execution conditions make handover more likely, compared to the unmodified handover execution conditions.

Other example handover execution conditions are also possible. For example, the B2 handover event in the art may be modified based on the power mode data. The B2 event occurs when a signal measurement of the serving cell is below a first threshold and an inter-RAT measurement becomes greater than a second threshold.

$$Mp + Hys < Thresh;$$

and

$$Mn + Ofn + Ocn - Hys > Thresh2.$$

The thresholds may be adjusted based on the power mode data. In one case, the thresholds may be adjusted to make handover more likely in response to an indication that the cell is scheduled to enter a power saving mode. In another case, the thresholds may be adjusted gradually so that handover becomes more likely over time, as the time at which the serving cell is scheduled to enter the power saving mode approaches.

In some cases, a base station may provide coverage via different radio access technologies and/or frequencies. It may be that only a subset of the RATs and/or frequencies are scheduled to be placed in a power saving mode.

Therefore, UEs connected via these RATs and/or frequencies should handover prior to the power saving mode. Since other RATs and/or frequencies may remain in full power mode, the UEs may handover to these and remain connected via the same base station as before the handover, but via a different RAT/frequency.

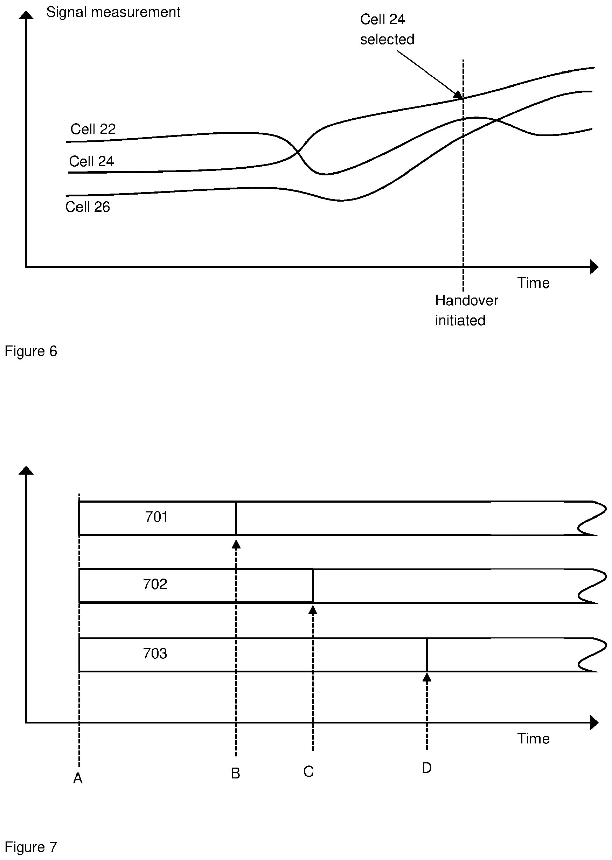

Once the time X is about to expire (i.e., the serving cell is about to enter the power saving mode imminently), there is a need to define a new handover execution condition to trigger the execution of a pre-configured handover commands to one of the potential target cells. The potential target cell may be selected simply based on the best signal measurement value out of the pre-configured potential target cells. This is shown in Figure 6, which illustrates a graph of a signal measurement (such as RSRP or RSRQ) for each of the potential target cells against time. At a certain point, if the UE is still connected to the serving cell and the power saving mode is scheduled imminently, handover is initiated to the potential target cell having the best signal measurement.

In the present invention, the handover execution conditions are modified based on the power mode data. For example, the thresholds, offsets, etc of a particular handover event may be modified depending on the time remaining until the serving cell is entering the power saving mode.

The serving cell may provide the UE with a value (e.g., in dBm) to be added/subtracted from the thresholds/offsets. Alternatively, the serving cell may provide the UE with instructions to adjust the thresholds/offsets as the time the serving cell is entering the power saving mode approaches.

As described above, handover execution conditions may be immediately configured at the UE (e.g., using the "measurements config" command). Alternatively, handover events may be configured ahead of time but not immediately enforced (e.g., using a CHO command with a "deactivated" flag). These events may then be activated (e.g., with a separate message) at the appropriate time, based on the time remaining until the serving cell is scheduled to enter the power saving mode.

As illustrated in Figure 7, three handover execution conditions 701, 702 and 703 are configured at time A but are configured with an activation flag, which is initially set (e.g., to FALSE) so that the handover execution conditions are deactivated. The handover execution conditions 701, 702 and 703 may be modified in view of the power mode data by setting the activation flag from an inactive state to an active. The active handover conditions may change as the time at which the power saving mode is scheduled approaches. At time B, handover condition 701 is activated. At time C, handover condition 702 is activated. At time D, handover condition 703 is activated.

The activation flag could be changed in response to an indication that the source cell is scheduled to enter a power saving mode. The UE may modify the activation flag in response to a determination that a time remaining until the source cell is scheduled to enter a power saving mode is less than a threshold time

The activation flag could be changed in response to an instruction to modify the activation flag communicated from the source cell to the UE. The instruction to modify the activation flag could be signalled explicitly or implicitly (e.g., based on the cell switch off indication).

For example, handover execution condition 701 may be an A3 event (determining that a signal measurement of the corresponding potential target cell is greater than a signal measurement of the source cell by at least an offset), handover execution condition 702 may be an A4 event (determining that a signal measurement of the corresponding potential target cell is greater than a threshold level), and handover execution condition 703 may be triggered by determining that a signal measurement of the corresponding potential target cell is greater than a signal measurement of the other potential target cells.

Conditions 701, 702 and 703 may relate to potential target cell 22. Similar conditions may be provided for the other potential target cells 24 and 26.

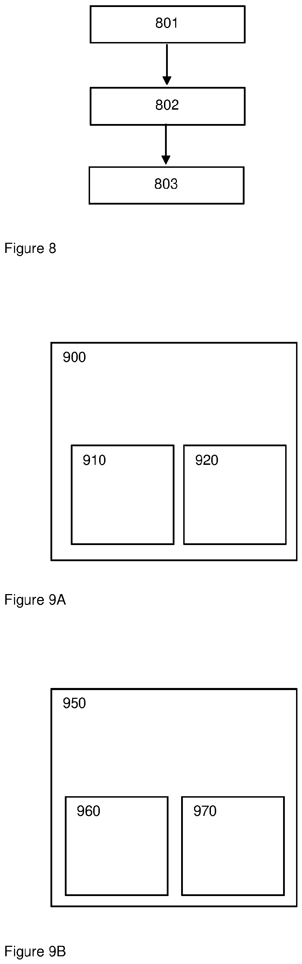

Figure 8 illustrates a method of managing handover between cells in a cellular telecommunications network, in accordance with a specific example. The method comprises the following steps:

801: communicating, to one or more active user equipment, UEs, served by a source cell, power mode data of the source cell;
802: determining, for each of one or more potential target cells, conditional handover configuration data and one or more associated handover execution conditions;
803: modifying the one or more handover execution conditions, based on the power mode data.

Figure 9A Illustrates a schematic diagram of a UE 900, in accordance with a specific example. The UE comprises a processor 910 and a transceiver 920 configured to receive power mode data, conditional handover configuration data and one or more associated handover execution conditions. The UE is configured to modify one or more handover execution conditions, based on the power mode data.

Figure 9B illustrates a schematic diagram of a base station 950, in accordance with a specific example. The base station comprises a processor 960 and a transceiver 970 configured to send (to one or more UEs) power mode data conditional handover configuration data, and one or more associated handover execution conditions. The base station is configured to modify one or more handover execution conditions, based on the power mode data.

Whilst the base station is described as a single base station the functions of the base station may be distributed across multiple different physical base station sites.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as an analogue to digital convertor) means "one or more" (for instance, one or more analogue to digital convertor). Throughout the description and claims of this disclosure, the words "comprise", "including", "having" and "contain" and variations of the words, for example "comprising" and "comprises" or similar, mean "including but not limited to", and are not intended to (and do not) exclude other components.

Although embodiments according to the disclosure have been described with reference to particular types of devices and applications (particularly a base station and a UE) and the embodiments have particular advantages in such case, as discussed herein, approaches according to the disclosure may be applied to other types of networks. The specific structural details of the platform and servers, whilst potentially advantageous (especially in view of known 3GPP constraints and capabilities), may be varied significantly to arrive at devices and methods with similar or identical operation. Each feature disclosed in this specification, unless stated otherwise, may be replaced by alternative features serving the same, equivalent or similar purpose. Thus, unless stated otherwise, each feature disclosed is one example only of a generic series of equivalent or similar features.

The use of any and all examples, or exemplary language ("for instance", "such as", "for example" and like language) provided herein, is intended merely to better illustrate the invention and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise.

All of the aspects and/or features disclosed in this specification may be combined in any combination, except combinations where at least some of such features and/or steps are mutually exclusive. As described herein, there may be particular combinations of aspects that are of further benefit, such the aspects of determining a set of compensation parameters and applying a set of compensation parameters to measurements. In particular, the preferred features of the invention are applicable to all aspects of the invention and may be used in any combination. Likewise, features described in non-essential combinations may be used separately (not in combination).

**Claims**

1. A method of managing handover between cells in a cellular telecommunications network, the method comprising:

   communicating, to one or more active user equipment, UEs, served by a source cell, power mode data of the source cell;
   determining, for each of one or more potential target cells, conditional handover configuration data and one or more associated handover execution conditions;
   modifying the one or more handover execution conditions, based on the power mode data.

2. The method of claim 1, wherein the power mode data comprises one or more of:

   an indication that the source cell is scheduled to enter a power saving mode;
   a time at which the source cell is scheduled to enter a power saving mode;
   a time remaining until the source cell is scheduled to enter a power saving mode;
   one or more threshold modification instructions, based on a time remaining until the source cell is scheduled to enter a power saving mode; and
   one or more offset modification instructions, based on a time remaining until the source cell is scheduled to enter a power saving mode.

3. The method of claim 1 or claim 2, wherein the one or more handover execution conditions comprise:

   determining that a signal measurement of the corresponding potential target cell is greater than a signal measurement of the source cell by at least an offset,
   wherein modifying the one or more handover execution conditions comprises modifying the offset, based on a time remaining until the source cell is scheduled to enter a power saving mode.

4. The method of any preceding claim, wherein the one or more handover execution conditions comprise:

  determining that a signal measurement of the corresponding potential target cell is greater than a threshold level, wherein modifying the one or more handover execution conditions comprises modifying the threshold level, based on a time remaining until the source cell is scheduled to enter a power saving mode.

5. The method of claim 1 or claim 2, wherein each of the one or more handover execution conditions comprises an activation flag, wherein the one or more handover execution conditions comprise:
determining that a signal measurement of the corresponding potential target cell is greater than a threshold level, wherein modifying the one or more handover execution conditions comprises setting the activation flag from an inactive state to an active state in response to:

  an indication that the source cell is scheduled to enter a power saving mode;
  an instruction to modify the activation flag communicated from the source cell to the UE; or
  a determination that a time remaining until the source cell is scheduled to enter a power saving mode is less than a threshold time.

6. The method of any preceding claim, wherein the one or more handover execution conditions comprise:
determining that a signal measurement of the corresponding potential target cell is greater than a signal measurement of the other potential target cells.

7. The method of any of claims 3 to 6, wherein the signal measurement comprises one or more of:

  a signal strength indicator; and
  a signal quality indicator.

8. The method of any preceding claim, wherein:

  the power mode data is simultaneously broadcast to the one or more active UEs;
  the power mode data is sent to a group comprising the one or more active UEs; or
  the power mode data is communicated to each of the one or more UEs via a respective dedicated message.

9. The method of any preceding claim, wherein the conditional handover configuration data are:

  based on current cell configuration data for the source cell; or
  based on reference configuration data;

10. The method of any preceding claim, wherein the conditional handover configuration data are received from the one or more potential target cells.

11. The method of claim 9 or claim 10, wherein each of the one or more active UEs is configured to initiate handover to a potential target cell based on the conditional handover configuration data, if one of the corresponding handover execution conditions is fulfilled.

12. The method of any of claims 9 to 11, further comprising:
determining that a handover execution condition is fulfilled and initiating handover to the corresponding target cell of the one or more potential target cells, based on the conditional handover configuration data.

13. A base station configured to perform the method of any of claims 1 to 11.

14. A User Equipment, UE, configured to perform the method of any of claims 1 to 12.

15. Computer software comprising instructions that, when executed by a processor of a computing device, cause the computing device to perform the method of any of claims 1 to 12.

Figure 1A

Figure 1B

Figure 2A

Figure 2B

Figure 3A

Figure 3B

Figure 4A

Figure 4B

Figure 4C

Figure 4D

Signal measurement

Threshold

Potential target cell

Handover condition met

Time

Figure 5A

Signal measurement

Threshold

Potential target cell

Time

Figure 5B

Signal measurement

Handover condition met

Potential target cell

Threshold

Time

Figure 5C

Figure 5D

Figure 6

Figure 7

801

↓

802

↓

803

Figure 8

900

910

920

Figure 9A

950

960

970

Figure 9B

Europäisches Patentamt

European Patent Office

Office européen des brevets

# EUROPEAN SEARCH REPORT

Application Number

EP 22 20 0599

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/086388 A1 (ERICSSON TELEFON AB L M [SE]) 28 April 2022 (2022-04-28) * pages 6-11 * ----- | 1-15 | INV. H04W36/36 ADD. |
| A | WO 2022/199430 A1 (HUAWEI TECH CO LTD [CN]) 29 September 2022 (2022-09-29) * paragraphs [0003] - [0004] * ----- | 1-15 | H04W36/08 H04W52/02 |

TECHNICAL FIELDS SEARCHED (IPC)

H04W

The present search report has been drawn up for all claims

| Place of search | Date of completion of the search | Examiner |
|---|---|---|
| Munich | 13 March 2023 | Pasini, Enrico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 20 0599**

This annex lists the patent family members relating to the patent documents cited in the above-mentioned European search report.
The members are as contained in the European Patent Office EDP file on
The European Patent Office is in no way liable for these particulars which are merely given for the purpose of information.

**13-03-2023**

| Patent document cited in search report | | Publication date | Patent family member(s) | | Publication date |
|---|---|---|---|---|---|
| WO 2022086388 | A1 | 28-04-2022 | NONE | | |
| WO 2022199430 | A1 | 29-09-2022 | CN | 115134740 A | 30-09-2022 |
| | | | WO | 2022199430 A1 | 29-09-2022 |

For more details about this annex : see Official Journal of the European Patent Office, No. 12/82

EPO FORM P0459